# EUROPÄISCHE PATENTANMELDUNG

(11) **EP 3 581 147 A1**
(43) Veröffentlichungstag der Anmeldung: **18.12.2019**
(21) Anmeldenummer: 18177111.4
(22) Anmeldetag: 11.06.2018
(51) Int. Cl.: A61C 9/00, A61C 11/00

(54) **VERFAHREN ZUM DREIDIMENSIONALEN ERFASSEN WENIGSTENS EINER RÄUMLICHEN RELATION ZWEIER PHYSISCHER OBJEKTE**

(71) Anmelder: a.tron3d GmbH, 9020 Klagenfurt am Wörthersee (AT)
(72) Erfinder: JESENKO, Juergen, 9587 Riegersdorf (AT)
(74) Vertreter: Beer & Partner Patentanwälte KG

(57) **Zusammenfassung**

Bei einem Verfahren zum dreidimensionalen Erfassen wenigstens einer räumlicher Relationen zweier physischer Objekte, insbesondere wenigstens eines Abschnittes eines Oberkiefers und wenigstens eines Abschnittes eines Unterkiefers, wobei zu wenigstens einem der Objekte ein physischer Negativabdruck oder ein physisches Modell vorliegt, wobei die wenigstens eine räumliche Relation digital ist, und das Verfahren die folgenden Schritte beinhaltet:
- Digitalisieren des physischen Negativabdrucks oder Modells oder der physischen Negativabdrücke oder Modelle,
- Erzeugen eines digitalen Modells zu jedem Objekt, von dem kein physisches Modell vorliegt,
- Erzeugen wenigstens eines digitalen Abdrucks wenigstens einer physischen, räumlichen Relation der Objekte, insbesondere einer Bissstellung des Oberkiefers zum Unterkiefer, und
- Herleiten wenigstens einer digitalen, räumlichen Relation aus dem wenigstens einen digitalen Abdruck.

## Beschreibung

Die Erfindung betrifft ein Verfahren zum dreidimensionalen Erfassen wenigstens einer räumlichen Relation zweier physischer Objekte, insbesondere wenigstens eines Abschnittes eines Oberkiefers und wenigstens eines Abschnittes eines Unterkiefers, wobei zu wenigstens einem der Objekte ein physischer Negativabdruck oder ein physisches Modell vorliegt.

In der 3D-Technologie im Allgemeinen und der 3D-Dentaltechnik im Speziellen gibt es verschiedene Probleme und Herausforderungen. Bisher bestand vor allem Interesse an einer möglichst realitätsgetreuen Aufnahme von Objekten. Nachdem inzwischen jedoch ein Präzisionsgrad bei der Aufnahme erreicht ist, der die derzeitigen Fertigungsmöglichkeiten überschreitet, können weitere Anforderungen an 3D-Modelle gelöst werden. Eine dieser Anforderungen ist das Zusammenspiel verschiedener 3D-Modelle. Dies kann beispielsweise ein einfaches Ineinandergreifen von Zahnrädern sein. In der Dentaltechnik ist vor allem die Artikulation von Ober- und Unterkiefer von großem Interesse. Nur wenn die Zähne und/oder der Zahnersatz von Ober- und Unterkiefer korrekt ineinandergreifen, kann eine angenehme und gesunde Nutzung des Kauapparats ermöglicht werden. Zu den negativen Effekten bei nicht korrekt zusammenspielenden Kieferhälften zählen eine frühzeitige Abnutzung von Zähnen und/oder Zahnersatz, Druck auf Nerven und Knochen, die in der Folge zu Kopf- und Kieferschmerzen führen können, sowie Schmerzen in den Kiefermuskeln.

Um ein möglichst naturnahes oder wünschenswertes Zusammenspiel von Zähnen und Zahnersatz zu erreichen, wird in der analogen Dentaltechnik ein physischer Abdruck des Bisses - das Bissregistrat - genommen. Die physischen (positiven) Modelle von Ober- und Unterkiefer werden dann dem Bissregistrat entsprechend ausgerichtet. Dies ist in der digitalen Dentaltechnik in dieser Form nicht möglich.

Ein weiteres Problem stellt sich, wenn der Umstieg von analoger zu digitaler Dentaltechnik erfolgt. Häufig wurden im Zuge der Behandlung bereits Änderungen an den intraoralen Strukturen vorgenommen und es ist nicht mehr möglich, die ursprüngliche, intraorale Situation direkt im Mundraum mit einem 3D-Scanner digital zu erfassen.

Der Erfindung liegt daher die Aufgabe zu Grunde, die oben beschrieben Nachteile zu überwinden.

Gelöst wird diese Aufgabe erfindungsgemäß durch ein Verfahren mit den Merkmalen des Anspruchs 1.

Beim erfindungsgemäßen Verfahren wird wenigstens eine räumliche Relation von wenigstens zwei physischen Objekten erfasst. Bei den Objekten kann es sich insbesondere um einen Ober- und einen Unterkiefer oder Abschnitte derselben handeln. Für die Funktion der Erfindung ist es zwar nicht erforderlich, dass die Kiefer oder Kieferabschnitte einander gegenüberliegen, allerdings ist aus rein praktischen Gesichtspunkten davon auszugehen, dass diese, insbesondere wenn es sich lediglich um Kieferabschnitte handelt, einander im Mundraum gegenüberliegen und bei Beiß- und/oder Kaubewegungen miteinander interagieren.

Erfindungsgemäß steht zunächst wenigstens ein positives, physisches Modell oder ein Negativabdruck eines der Objekte, also eines Kiefers oder Kieferabschnittes, zur Verfügung. Dieses Modell und/oder dieser Negativabdruck kann/können zu einem beliebigen früheren Zeitpunkt erzeugt worden sein.

Alle physischen Modelle und/oder Abdrücke werden für das erfindungsgemäße Verfahren digitalisiert. Hierfür können mögliche Negativabdrücke zuvor in Modelle umgewandelt werden, beispielsweise durch Abgießen der Negativabdrücke. Es ist aber auch möglich, die Negativabdrücke zu digitalisieren und rechnerisch in Positivabdrücke umzuwandeln.

Wie genau das rechnerische Umwandeln eines digitalisierten Negativabdruckes in ein digitales Modell des Objektes, erfolgt, hängt von der Notation des digitalisierten Negativabdrucks ab. Beispielhaft, jedoch nicht beschränkend, seien an dieser Stelle grob die Methoden für das rechnerische Umwandeln von digitalisierten Negativabdrücken, die in einer (T)SDF oder einem Polygonnetz notiert sind, beschrieben.

Ist das Modell in einer auf einem Voxelgrid basierenden (Truncated) Signed Distance Funktion notiert, genügt es, das Vorzeichen in der Notation zu wechseln, da durch dieses bestimmt wird, ob sich ein Voxel des Voxelgrids innerhalb oder außerhalb der Oberfläche des digitalen Modells befindet.

Bei Notationen, welche aus Polygonnetzen - am häufigsten aus Dreiecksnetzen - bestehen, werden die Eckpunkte des Polygons sowie ein Vektor, welcher normal zur Fläche des Polygons steht, notiert. Dieser Vektor gibt an, welche Seite des Polygons sich an der Außenseite des notierten Objektes befindet. Ein Umkehren dieser Vektoren vertauscht folglich Innen- und Außenseite des digitalen Modells und wandelt einen Negativabdruck in ein (positives) Modell um.

Weiters werden erfindungsgemäß zu allen übrigen Objekten, zu denen keine physischen Modelle oder Negativabdrücke vorliegen, digitale Modelle erzeugt. Dies kann gemäß einer Weiterbildung der Erfindung auch über den Zwischenschritt des Erzeugens eines physischen Negativabdrucks bzw. eines physischen Modells erfolgen.

Zusätzlich wird ein digitaler Abdruck wenigstens einer physischen, räumlichen Relation der Objekte erzeugt. Dafür können beispielsweise die zusammengebissenen Zähne gescannt werden.

Dieser digitale Abdruck der physischen, räumlichen Relation entspricht dabei noch nicht einer vollständigen, digitalen, räumlichen Relation. Vielmehr ist davon auszugehen, dass während des Scannens Bereiche der in räumlicher Relation stehenden Objekte durch das jeweils andere Objekt oder die jeweils anderen Objekte verdeckt sind. Handelt es sich bei den Objekten um Kieferabschnitte oder Kiefer, sind beispielsweise die Kauflächen und Innenseiten der Zähne verdeckt, wenn die Kiefer aufeinander beißen.

In einem letzten Schritt werden dann die digitalen Modelle an dem digitalen Abdruck der physischen, räumlichen Relation ausgerichtet. Dadurch entsteht eine digitale, räumliche Relation. Dieser Schritt kann selbstverständlich für alle digitalen Abdrücke der physischen, räumlichen Relationen wiederholt werden, sofern mehrere solcher Abdrücke erzeugt wurden. Dieser Schritt kann automatisiert, beispielsweise über eine Anwendung des bekannten ICP Algorithmus, oder auch manuell, beispielsweise durch manuelles Verschieben von gerenderten, digitalisierten Modellen auf einem Bildschirm, erfolgen.

Weiters kann, sofern zwei oder mehr digitale, räumliche Relationen erzeugt wurden, in einer bevorzugten Weiterbildung der Erfindung eine Bewegung zwischen diesen Relativpositionen hergeleitet werden. Handelt es sich bei den Objekten um Zähne, gilt: Umso mehr unterschiedliche digitale, räumliche Relationen für das Herleiten einer Bewegung hinzugezogen werden, umso stärker entspricht die hergeleitete Bewegung einer realen Kaubewegung.

Für die Erfindung ist es unerheblich, in welcher Reihenfolge die digitalen Modelle und der digitale Abdruck bzw. die digitalen Abdrücke der physischen räumlichen Relation erzeugt werden, solange diese für den letzten Schritt zur Verfügung stehen.

Ebenso ist die Notation, in welcher die digitalen Modelle und Abdrücke hinterlegt sind, für die Erfindung weitgehend unerheblich. Erläuternd, jedoch nicht limitierend, seien an dieser Stelle SDF, TSDF sowie die meisten auf Polygonnetzen basierenden Notationen erwähnt.

In einer weiteren, bevorzugten Weiterbildung der Erfindung können alle Vorgänge, bei welchen physische Objekte digitalisiert werden, durch einen gleichen oder denselben Scanner erfolgen. Dies hat den Vorteil, dass das Verfahren kostengünstiger durchgeführt werden kann, als wenn beispielsweise ein eigener Standscanner für das Digitalisieren der physischen Modelle zur Verfügung gestellt werden muss.

Andererseits kann es aber auch vorteilhaft sein, wenn das Digitalisieren durch verschiedene, insbesondere verschiedenartige, Scanner erfolgt. So können beispielsweise ortsfeste Desktopscanner die physischen Modelle wesentlich präziser erfassen, als es mit handgeführten Scannern, die auch intraoral verwendet werden können, möglich ist.

Bevorzugt können alle Schritte des Verfahrens an unterschiedlichen Orten durchgeführt werden; insbesondere kann das Digitalisieren des physischen Negativabdrucks oder Modells oder der physischen Negativabdrücke oder Modelle an einem anderen Ort erfolgen, als das Erzeugen eines digitalen Modells von jedem Objekt, von dem kein physisches Modell vorliegt. Auch das Erzeugen wenigstens eines digitalen Abdrucks wenigstens einer physischen, räumlichen Relation der Objekte kann an einem anderen Ort erfolgen. So können beispielsweise die Objekte, insbesondere die Zähne, bei einem Zahnarzt digitalisiert werden, während die Modelle beispielsweise bei einem Zahntechniker aufbewahrt und dort auch digitalisiert werden.

Analog ist es auch nicht erforderlich, dass die Schritte unmittelbar hintereinander erfolgen. Vielmehr können auch Monate zwischen den einzelnen Schritten vergehen, ohne dass sich dies negativ auf das Verfahren auswirkt, sofern keine grundlegenden Änderungen an den Objekten selbst vorgenommen wurden, also beispielsweise die Stellung des Gebisses grundlegend, beispielsweise durch eine Zahnspange, verändert wurde.

Grundsätzlich wird festgehalten, dass es sich im Sinne der Erfindung bei Modellen um physische oder digitale, dreidimensionale Abbilder der Objekte handelt, wohingegen physische, digitale oder digitalisierte Abdrücke und Negativabdrücke Vorstufen sind, die zu Modellen und/oder digitalen, räumlichen Relationen verarbeitet werden können.

Weitere bevorzugte Ausführungsformen der Erfindung sind Gegenstand der übrigen Unteransprüche.

Nachstehend ist ein bevorzugtes Ausführungsbeispiel der Erfindung anhand der Zeichnungen näher beschrieben. Es zeigt:
- Fig. 1: ein beispielhaftes, erfindungsgemäßes Verfahren und
- Fig. 2: eine beispielhafte Anwendung des erfindungsgemäßen Verfahrens.

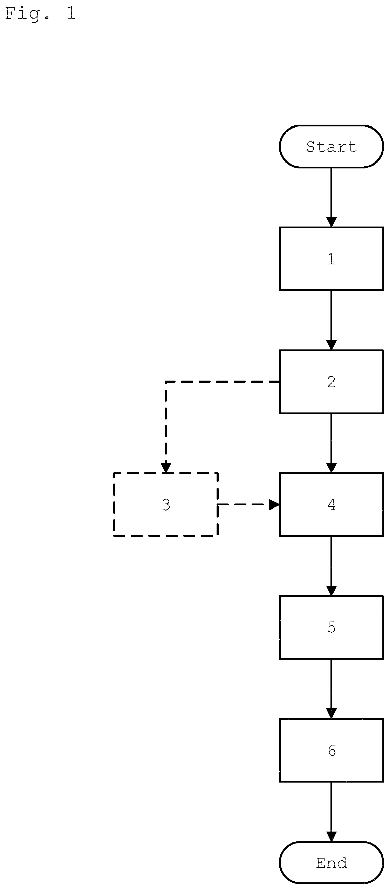

Fig. 1 zeigt ein Flussdiagramm eines beispielhaften, erfindungsgemäßen Verfahrens. In einem Schritt 1 wird zunächst ein physischer Negativabdruck oder ein physisches Modell eines ersten Objekts zur Verfügung gestellt. Der physische Negativabdruck oder das physische Modell des ersten Objektes aus Schritt 1 wird dann in Schritt 2 digitalisiert und dabei ein digitales Modell des ersten Objektes erzeugt. Als nächstes wird ein digitales Modell des zweiten Objektes erzeugt. Hierfür kann optional zunächst in einem Schritt 3 ein Negativabdruck oder ein physisches Modell des zweiten Objekts erzeugt werden. In Schritt 4 wird das zweite Objekt digitalisiert und dabei ein zweites, digitales Modell erzeugt. Wenn Schritt 3 nicht erfolgt, kann auch das Objekt selbst, beispielsweise mit einem 3D-Scanner, erfasst werden. Im folgenden Schritt 5 wird ein digitaler Abdruck einer physischen, räumlichen Relation der Objekte, insbesondere eines Bisses, erzeugt. In Schritt 6 wird dann eine räumliche Relation der digitalen Modelle anhand des digitalen Abdrucks erzeugt.

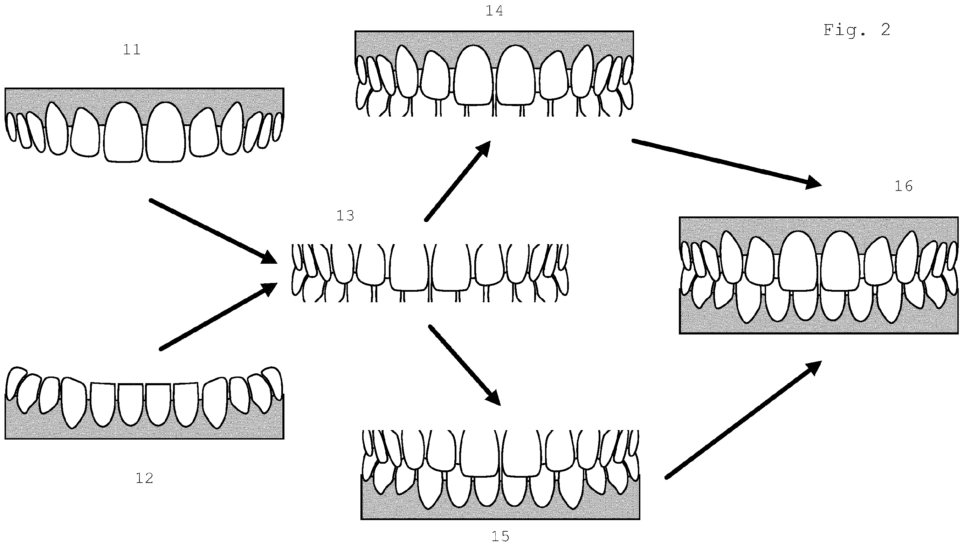

Fig. 2 zeigt stark schematisiert ein Anwendungsbeispiel des erfindungsgemäßen Verfahrens, bei dem die zwei digitalen Modelle 11, 12 Kiefer sind. Das erste digitale Modell 11 in Fig. 2 stellt symbolisch einen Oberkiefer dar. Das zweite digitale Modell 12 in Fig. 2 stellt symbolisch einen Unterkiefer dar. Weiters zeigt Fig. 2 einen digitalen Abdruck 13 eines Bisses. Dieser digitale Abdruck 13 ist mit einem (physischen) Bissregistrat, wie es in der herkömmlichen Zahntechnik zur Bestimmung der Kieferrelation verwendet wird, vergleichbar. Ähnlich wie bei einem Bissregistrat, das nur die Kauflächen von Ober- und Unterkiefer beim Zubeißen abbildet, zeigt der digitale Abdruck 13 im vorliegenden Fall lediglich einen Teil der Kiefer, insbesondere einen Teil der Außenseiten der Zähne, von Ober- und Unterkiefer beim Zubeißen, da es für einen 3D-Scanner während des Zubeißens nicht möglich ist, die Kauflächen oder Innenseiten (lingualen Seiten) der Zähne zu erfassen.

In dem in Fig. 2 gezeigten Anwendungsbeispiel der Erfindung wird daher zum Erfassen der korrekten Kieferrelation zusammen mit vollständigen Modellen von Ober- und Unterkiefer zunächst das erste digitale Modell 11 mit dem digitalen Abdruck 13 zu einer ersten Zwischenregistrierung 14 registriert. Selbstverständlich lässt sich ein erfindungsgemäßes Verfahren auch mit unvollständigen Modellen durchführen. Dann wird das zweite digitale Modell 12 mit dem digitalen Abdruck 13 zu einer zweiten Zwischenregistrierung 15 registriert. Da über beide Zwischenregistrierungen 14, 15 jeweils die räumliche Relation des ersten und zweiten digitalen Modells 11, 12 zum digitalen Abdruck 13 bekannt ist, ist auch indirekt das räumliche Verhältnis des ersten und zweiten digitalen Modells 11, 12 zueinander bekannt. In einem finalen Schritt können beide Zwischenregistrierungen 14, 15 zu einem finalen Datensatz 16 zusammengeführt werden. Der finale, zusammengeführte Datensatz 16 beinhaltet dann die geometrischen Informationen zum Ober- und Unterkiefer sowie eine dem Biss entsprechende Kieferkorrelation.

Wenn die digitalen Oberflächen als SDF oder TSDF dargestellt sind, wie es im dargestellten Beispiel der Fall ist, können die Registrierungen als einfache Translationsmatrizen notiert werden, welche jeweils aus der Kombination eines Translationsvektos mit einer Rotationsmatrix bestehen.

Die in Fig. 2 gezeigten Zwischenregistrierungen 14, 15 dienen dabei lediglich der Veranschaulichung. Es ist weder erforderlich, die kompletten ersten und zweiten digitalen Modelle mit dem digitalen Abdruck 13 zusammen zu führen, noch dass das Zusammenführen mit dem digitalen Abdruck 13 vollständig erfolgt. Es genügt, lediglich eine entsprechende Translationsmatrix (bestehend aus einem Translationsvektor und einer Rotationsmatrix) zum jeweiligen Modell zu hinterlegen. Die beiden Translationsmatrizen können dann mit einer einfachen geometrischen Operation so zusammengefügt werden, dass Ober- und Unterkiefer in einem neuen 3D-Modell korrekt zueinander positioniert sind.

Inhalt der Figuren:
Fig. 1
- 1: physisches Modell des ersten Objekts wird zur Verfügung gestellt
- 2: physisches Modell aus 1 wird digitalisiert und dabei ein erstes, digitales Modell erzeugt
- 3: (optional) physisches Modell des zweiten Objekts wird erzeugt
- 4: zweites Objekt wird digitalisiert und dabei ein zweites, digitales Modell erzeugt
- 5: digitaler Abdruck eines Bisses wird erzeugt
- 6: eine räumliche Relation der digitalen Modelle wird anhand des digitalen Abdrucks erzeugt.
- 11: erstes digitales Modell (Oberkiefer)
- 12: zweites digitales Modell (Unterkiefer)
- 13: digitaler Abdruck eines Bisses
- 14: erster Zwischenschritt
- 15: zweiter Zwischenschritt
- 16: räumliche Relation der digitalen Modelle (Oberkiefer, Unterkiefer und Kieferkorrelation)

## Patentansprüche

1. Verfahren zum dreidimensionalen Erfassen wenigstens einer räumlichen Relationen zweier physischer Objekte, insbesondere wenigstens eines Abschnittes eines Oberkiefers und wenigstens eines Abschnittes eines Unterkiefers, wobei zu wenigstens einem der Objekte ein physischer Negativabdruck oder ein physisches Modell vorliegt, **dadurch gekennzeichnet, dass** die wenigstens eine räumliche Relation digital ist, und dass das Verfahren die folgenden Schritte beinhaltet:
- Digitalisieren des physischen Negativabdrucks oder Modells oder der physischen Negativabdrücke oder Modelle,
- Erzeugen eines digitalen Modells zu jedem Objekt, von dem kein physisches Modell vorliegt,
- Erzeugen wenigstens eines digitalen Abdrucks wenigstens einer physischen, räumlichen Relation der Objekte, insbesondere einer Bissstellung des Oberkiefers zum Unterkiefer, und
- Herleiten wenigstens einer digitalen, räumlichen Relation aus dem wenigstens einen digitalen Abdruck.

2. Verfahren nach Anspruch 1, **dadurch gekennzeichnet, dass** zwei oder mehr digitale, räumliche Relationen erfasst werden und dass eine Bewegung zwischen den digitalen, räumlichen Relationen rekonstruiert wird.

3. Verfahren nach Anspruch 1 oder 2, **dadurch gekennzeichnet, dass** die digitalen Modelle automatisch in Relation zum digitalen Abdruck gebracht werden.

4. Verfahren nach Anspruch 1 oder 2, **dadurch gekennzeichnet, dass** die digitalen Modelle manuell in Relation zum digitalen Abdruck gebracht werden.

5. Verfahren nach einem der Ansprüche 1 bis 4, **dadurch gekennzeichnet, dass** das Digitalisieren durch einen gleichen oder denselben Scanner erfolgt.

6. Verfahren nach einem der Ansprüche 1 bis 4, **dadurch gekennzeichnet, dass** das Digitalisieren durch verschiedene, insbesondere verschiedenartige, Scanner erfolgt.

7. Verfahren nach einem der Ansprüche 1 bis 6, **dadurch gekennzeichnet, dass** das Digitalisieren des physischen Negativabdrucks oder Modells oder der physischen Negativabdrücke oder Modelle an einem anderen Ort erfolgt als das Erzeugen eines digitalen Modells zu jedem Objekt, von dem kein physisches Modell vorliegt bzw. das Erzeugen wenigstens eines digitalen Abdrucks wenigstens einer physischen, räumlichen Relation der Objekte.
